# EUROPEAN PATENT SPECIFICATION

(11) **EP 3 031 980 B1**
(45) Date of publication and mention of the grant of the patent: **18.09.2019**
(21) Application number: 15198738.5
(22) Date of filing: 09.12.2015
(51) Int. Cl.: D06F 81/00, D06F 81/02, D06F 81/04

(54) **FOLDING IRONING BOARD**
AUSKLAPPBARES BÜGELBRETT
PLANCHE À REPASSER PLIABLE

(30) Priority: 10.12.2014 IT MI20140384 U
(43) Date of publication of application: 15.06.2016
(73) Proprietor: Colombo New Scal S.P.A., 23888 La Valletta Brianza (LC) (IT)
(72) Inventor: COLOMBO, Giovanni Cesare, 23886 Colle Brianza (LC) (IT); COLOMBO, Paolo Orlando, 23884 Castello di Brianza (LC) (IT)
(74) Representative: Branca, Emanuela

(56) References cited:
- GB-A- 2 261 311
- US-A- 5 924 226
- US-A1- 2011 011 991
- US-A1- 2012 246 983
- US-B2- 6 796 059

## Description

The present invention refers generally to an ironing board and more particularly to a folding ironing board.

Several types of ironing boards are currently known, either of floor type or usable on a specific support surface. In particular, the so-called floor ironing boards are usually provided with a folding structure which comprises at least one support foot, configured to keep the structure fixed and stable on the floor in the open configuration of the ironing board, and at least one shaped surface which, in the open configuration of the ironing board, is arranged in a substantially horizontal position, at a predetermined height with respect to the floor, so as to form a support surface on which the garments to be ironed are arranged. Some ironing boards may also be provided with an additional shelf, either fixed or movable, adapted to support an iron, as well as one or more compartments for containing the garments to be ironed and/or the ironed garments.

In the folded configuration, a generic floor ironing board is designed to have as little overall dimensions as possible, and it is therefore possible to place it even in confined spaces such as cabinets, closets, etc. The transition from the folded configuration to the open configuration and vice versa usually occurs as a result of the rotation, about predetermined hinging points, of the support feet of the ironing board, typically consisting of a pair of mutually articulated arms in a substantially X-shaped configuration.

The folding ironing boards of the known type are generally not provided with any type of safety system that prevents the accidental closing of the ironing board itself when working and is possibly loaded with the clothes to be ironed and with the iron. The accidental closing of the ironing board may in fact be caused by accidental movements made by a user. The accidental closing of an ironing board when working is a highly hazardous event, as it my also cause physical injury to the user.

In addition, the folding ironing boards of known type are also not provided with any type of safety system that prevents the accidental opening of the ironing board itself when it is in the rest configuration. Although not involving particular risks for the user, however the accidental opening of a folded ironing board, which is normally placed in places filled with objects of various types, can result in material damage even of a certain entity.

Document US 5 924 226 A discloses a folding ironing board according to the preamble of claim 1, wherein the ironing board is provided with a height adjustment mechanism capable of keeping the ironing board surface at a predetermined height from the ground. The height adjustment mechanism is coupled with a leg-locking arrangement capable of blocking the support structure of the ironing board in its folded or collapsed configuration only.

Document US 2012/246983 A1 discloses a folding ironing board provided with a mechanism for adjusting the length of the ironing board in its collapsed state. The mechanism is also capable of adjusting the position of the support structure relative to the ironing board

US 2011/011991 A1 discloses an ironing board with the features of the preamble of claim 1.

The general object of the present invention therefore is to provide a folding ironing board which is capable of solving the above drawbacks of the prior art in an extremely simple, cost-effective and particularly functional manner.

In detail, an object of the present invention is to provide a folding ironing board in which the problem of the accidental closing and opening of the ironing board itself is prevented or at least minimized.

This object according to the present invention is achieved by providing a folding ironing board as described in claim 1.

Further features of the invention are highlighted in the dependent claims, which are an integral part of the present description.

The features and the advantages of a folding ironing board according to the present invention will become more evident from the following exemplary and non-limiting description, made with reference to the accompanying schematic drawings, in which:
figure 1 is a perspective view of a first embodiment of a folding ironing board according to the present invention, shown in a first operating configuration;
figure 2 is a perspective view of a detail of the folding ironing board in the operating configuration in figure 1;
figure 3 is a perspective view of the folding ironing board in figure 1, shown in a second operating configuration;
figure 4 is a perspective view of a detail of the folding ironing board in the operating configuration in figure 3;
figure 5 is an exploded view of some components of the folding ironing board in figure 1; and
figures 6, 7 and 8 are perspective views of further exemplary embodiment of a folding ironing board according to the present invention.

With reference to the figures, some preferred embodiments of the folding ironing board according to the present invention, generally indicated with the reference numeral 10, are shown. The ironing board 10 consists of a folding structure which comprises at least one support foot 12, configured to keep such a structure fixed and stable on the floor in an open or operating configuration of the ironing board 10, and at least one work surface 14 which, in the open or operating configuration of the ironing board 10, is arranged in a substantially horizontal position, at a predetermined height with respect to the floor, so as to form a support surface on which the garments to be ironed are arranged.

The work surface 14 is slidably and/or pivotably constrained to the at least one support foot 12 to allow the rotation or the mutual rotational translation of such a work surface 14 with respect to said at least one support foot 12, so that the ironing board 10 can pass from the open or operating configuration to a folded configuration and vice versa. The ironing board 10 is provided with a safety mechanism 16 operatively connected to at least one support foot 12 and configured to selectively block the rotation or mutual rotational translation movement of the work surface 14 with respect to such at least one support foot 12.

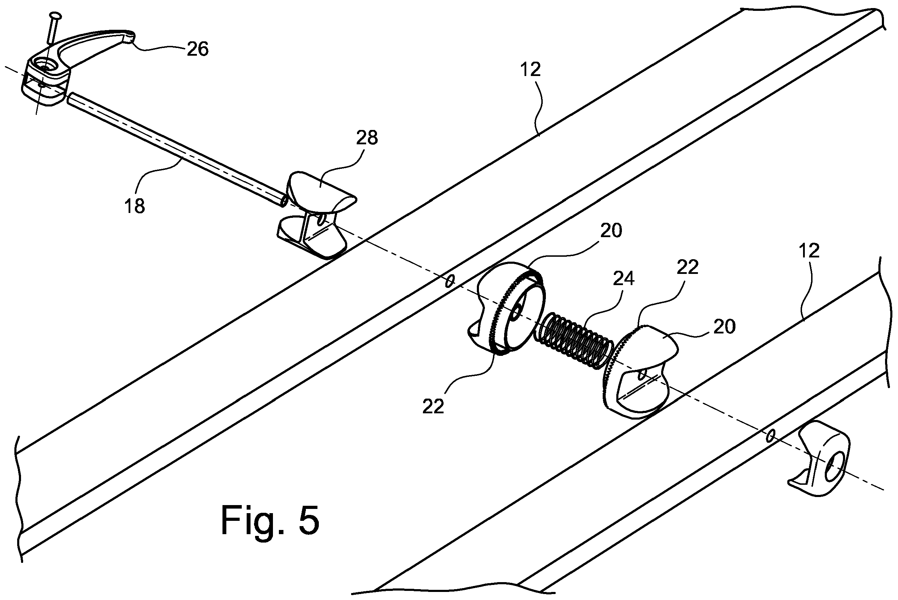

In detail, according to the preferred embodiments of the ironing board 10 according to the present invention, the at least one support foot 12 consists of a pair of mutually articulated arms 12 in a substantially X-shaped configuration. A first arm 12 is pivotably constrained, at an upper end thereof, to the lower surface of the work surface 14, while the second arm 12 is in turn slidably constrained, again at an upper end thereof, to the lower surface of the work surface 14. The two arms 12 are also mutually hinged around a pin 18 (figure 5) on which the safety mechanism 16 is installed, in such a way that the safety mechanism 16 itself is able to selectively block the reciprocal rotation movement of the two arms 12 and, consequently, the corresponding rotational translation movement of such two arms 12 with respect to the work surface 14.

Preferably, the safety mechanism 16 includes a pair of blocking elements 20, each of which is irremovably constrained to a respective arm 12. Both blocking elements 20 are provided with respective opposing surfaces 22 which mutually engage by friction to block the mutual rotation movement of the two arms 12. Advantageously, both opposing surfaces 22 are provided with mutually meshing teeth to increase the friction force between the two blocking elements 20.

The safety mechanism 16 then includes at least one elastic component 24, such as a helical spring acting by compression, interposed between the two blocking elements 20 and configured to keep such blocking elements 20 disengaged when the safety mechanism 16 is not actuated. Finally, the safety mechanism 16 includes a handle 26, operatively connected to the two blocking elements 20 and configured to selectively bring closer the two blocking elements 20, counteracting the elastic force of spring 24, to move the safety mechanism 16 to the blocked position, as well as to distance such two blocking elements 20, releasing spring 24 to move the safety mechanism 16 to the unlocked position.

The handle 26 is rotatably constrained at a first end of the pin 18 and therefore works to bring closer or distance the two blocking elements 20 along the axial direction of such a pin 18. In order to prevent the undesired release of handle 26, which may cause the accidental release of the safety mechanism 16, a stopping means 28 may be attached on one of arms 12, configured to keep such a handle 26 in the blocked position unless a predetermined unlocking force is applied on handle 26 itself.

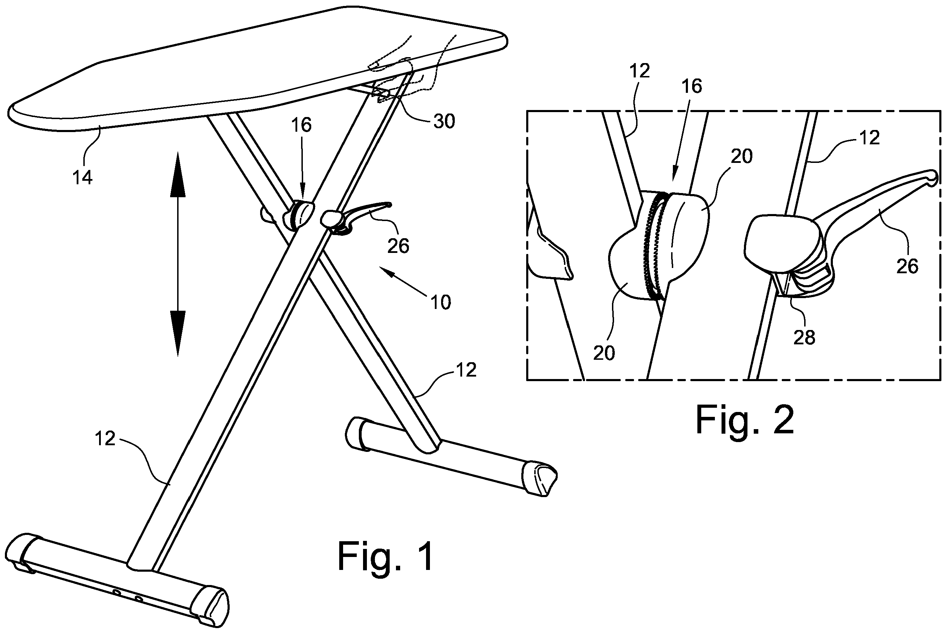

Figures 1 and 2 show the ironing board 10 in a first operating configuration, in which the safety mechanism 16 is in the unlocked position. To carry out the normal operations of opening/closing the ironing board 10, as well as adjusting the height of the work surface 14, handle 26 is kept in the unlocked position. In this position, the two blocking elements 20 are not engaged (figure 2) and it is therefore possible to actuate a dedicated lever 30 for adjusting the height of the work surface 14. In this position, the ironing board can also be opened or closed as desired. Once such a desired working configuration is obtained, handle 26 can be moved to the locked position.

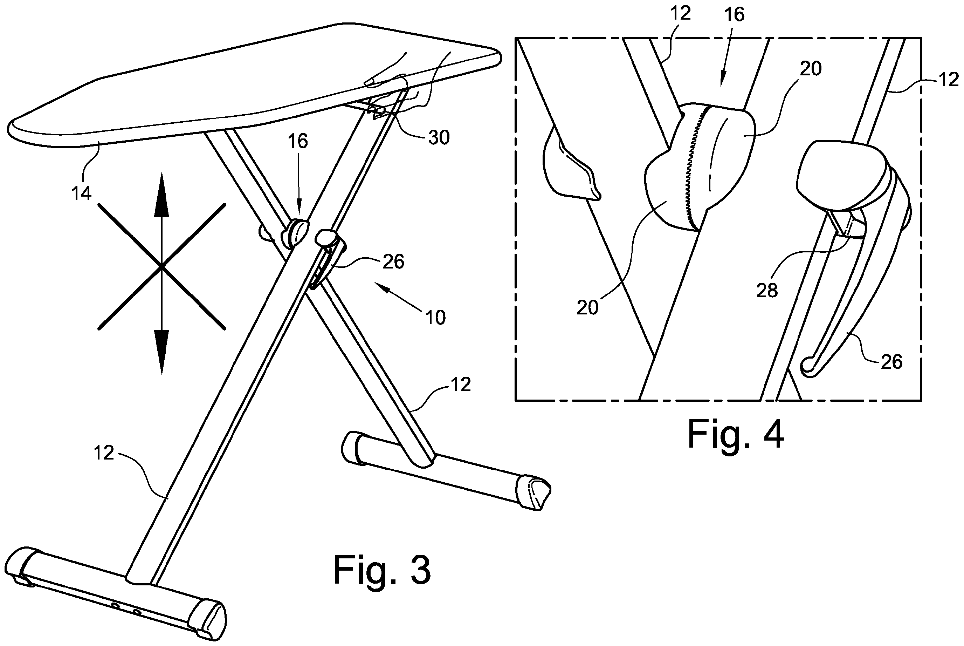

Figures 3 and 4 show the ironing board 10 in a second operating configuration, in which the safety mechanism 16 is in the blocked position. In this position, the two blocking elements 20 are engaged and the working configuration of the ironing board 10 cannot be changed. In other words, even by the accidental or voluntary actuation of lever 30 for adjusting the height of the work surface 14, the ironing board 10 remains stationary without being able to fold, thus preventing the accidental closing of the ironing board 10 itself.

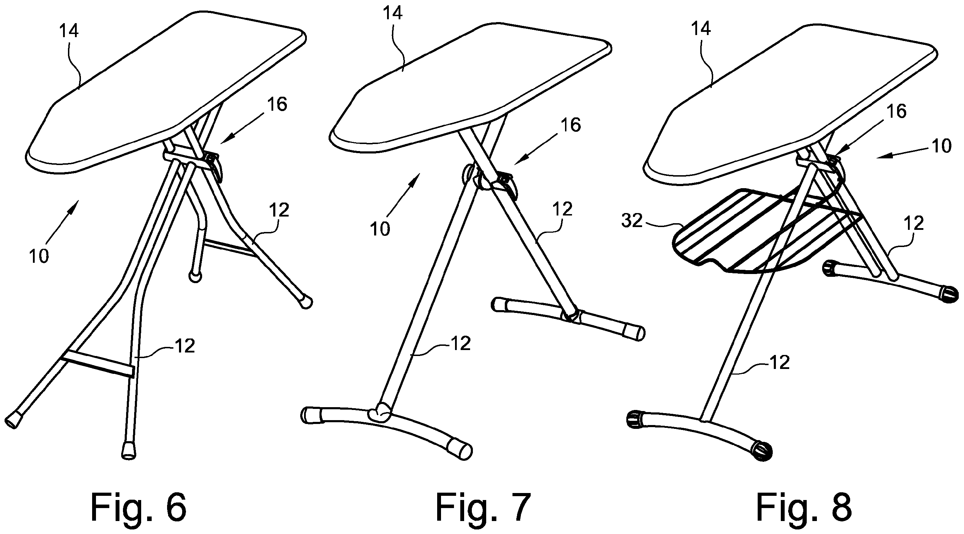

The operating principle of the safety mechanism 16 can be applied to different types of ironing board 10, such as those shown in figures 6, 7 and 8. The ironing board 10 may in fact be provided with support feet 12 formed by a plurality of tubular profiles (figure 6), by single tubular elements (figure 7), by mixed tubular elements (single and double, figure 8) and more, with different sections and materials. The ironing board 10 may also be provided with various accessories, such as shelves 32, either fixed or movable, compartments to hold the garments to be ironed and/or the ironed garments and more.

It has thus been seen that the folding ironing board according to the present invention achieves the objects described above.

The folding ironing board thus conceived can in any case be subjected to numerous modifications and variants, all falling within the same inventive concept; moreover, all details may be replaced with technically equivalent elements. In the practice, the materials used as well as shapes and sizes, may be any, according to the technical requirements.

The scope of protection of the invention is therefore defined by the accompanying claims.

## Claims

1. Ironing board (10) consisting of a folding structure which comprises at least one support foot (12), configured to keep said structure fixed and stable on the floor in an open or operating configuration of the ironing board (10), and at least one work surface (14) which, in the open or operating configuration of the ironing board (10), is arranged in a substantially horizontal position, at a predetermined height with respect to the floor, so as to form a support surface on which the garments to be ironed are placed, the work surface (14) being slidably and/or pivotably constrained to said at least one support foot (12) to allow the rotation or the mutual rotational translation of said work surface (14) with respect to said at least one support foot (12) so that the ironing board (10) can pass from the open or operating configuration to a folded configuration and vice versa, the ironing board (10) comprising a safety mechanism (16) operatively connected to said at least one support foot (12) and configured to selectively block the rotation or mutual rotational translation movement of the work surface (14) with respect to said at least one support foot (12), wherein said at least one support foot (12) consists of a pair of mutually articulated arms (12) in a substantially X-shaped configuration, wherein a first arm (12) is pivotably constrained, at an upper end thereof, to the lower surface of the work surface (14) while the second arm (12) is slidably constrained, at an upper end thereof, to the lower surface of the work surface (14), and **characterised in that** the two arms (12) are also mutually hinged around a pin (18) on which the safety mechanism (16) is installed, so that said safety mechanism (16) is able to selectively block the mutual rotation movement of the two arms (12) and consequently, the corresponding rotational translation movement of said two arms (12) with respect to the work surface (14), wherein the safety mechanism (16) comprises a pair of blocking elements (20), each of which is irremovably constrained to a respective arm (12), both blocking elements (20) being provided with respective opposing surfaces (22) which mutually engage by friction to block the mutual rotation of the two arms (12), wherein both opposing surfaces (22) are provided with mutually meshing teeth to increase the friction force between the two blocking elements (20), wherein the safety mechanism (16) comprises at least one elastic component (24) interposed between the two blocking elements (20) and configured to keep said blocking elements (20) disengaged when the safety mechanism (16) is not actuated,
wherein the safety mechanism (16) comprises a handle (26), operatively connected to the two blocking elements (20) and configured to selectively bring closer said two blocking elements (20), counteracting the elastic force of said at least one elastic component (24), to move the safety mechanism (16) to the blocked position, as well as to distance said two blocking elements (20), releasing said at least one elastic component (24) to move the safety mechanism (16) to the unlocked position,
wherein a stopping means (28) is attached to one of the arms (12), configured to keep the handle (26) in the blocked position unless a predetermined unlocking force is applied on said handle (26), so as to prevent the undesired release of said handle (26), which may cause the accidental unlocking of the safety mechanism (16).

2. Ironing board (10) according to claim 1, **characterized in that** said at least one elastic component (24) consists of a helical spring acting by compression.

3. Ironing board (10) according to claim 1 or 2, **characterized in that** the handle (26) is rotatably constrained at a first end of the pin (18) and therefore acts to bring closer or distance the two blocking elements (20) along the axial direction of said pin (18).

4. Ironing board (10) according to any one of the claims 1-3, **characterized in that** it comprises a lever (30) for the height adjustment of the work surface (14), the actuation of said lever (30) being prevented in the operating configuration in which the safety mechanism (16) is in the blocked position.

## Patentansprüche

1. Bügelbrett (10) bestehend aus einer Klappstruktur, die wenigstens einen Stützfuß (12) umfasst, der ausgebildet ist, um die Struktur in einer geöffneten bzw. Betriebskonfiguration des Bügelbretts (10) fest und stabil auf dem Boden zu halten, und wenigstens eine Arbeitsfläche (14), die in der geöffneten bzw. Betriebskonfiguration des Bügelbretts (10) in einer im Wesentlichen horizontalen Position auf einer vorgegebenen Höhe in Bezug auf den Boden angeordnet ist, um eine Auflagefläche zu bilden, auf die die zu bügelnden Kleidungsstücke gelegt werden, wobei die Arbeitsfläche (14) verschiebbar oder drehbar mit dem wenigstens einen Stützfuß (12) verbunden ist, um eine Drehung oder gegenseitige Drehverschiebung der Arbeitsfläche (14) in Bezug auf den wenigstens einen Stützfuß (12) zu erlauben, so dass das Bügelbrett (10) von der geöffneten bzw. Betriebskonfiguration zu einer zusammengeklappten Konfiguration oder umgekehrt übergehen kann, wobei das Bügelbrett (10) einen Sicherheitsmechanismus (16) umfasst, der mit dem wenigstens einen Stützfuß (12) wirkverbunden und ausgebildet ist, um die Drehung oder gegenseitige Drehverschiebung der Arbeitsfläche (14) in Bezug auf den wenigstens einen Stützfuß (12) selektiv zu sperren, wobei der wenigstens eine Stützfuß (12) aus einem Paar von gelenkig miteinander verbundenen Armen (12) in einer im Wesentlichen X-förmigen Konfiguration besteht, wobei ein erster Arm (12) an einem oberen Ende desselben drehbar mit der unteren Fläche der Arbeitsfläche (14) verbunden ist, während der zweite Arm (12) verschieblich an einem oberen Ende desselben mit der unteren Fläche der Arbeitsfläche (14) verbunden ist und **dadurch gekennzeichnet, dass**
die beiden Arme (12) auch gegenseitig um einen Stift (18) angelenkt sind, in dem der Sicherheitsmechanismus (16) eingebaut ist, so dass der Sicherheitsmechanismus (16) in der Lage ist, die gegenseitige Drehbewegung der beiden Arme (12) und demzufolge die entsprechende Drehverschiebungsbewegung der beiden Arme (12) in Bezug auf die Arbeitsfläche (14) selektiv zu sperren, wobei der Sicherheitsmechanismus (16) ein Paar von Sperrelementen (20) umfasst, die jeweils unverrückbar mit einem jeweiligen Arm (12) verbunden sind, wobei beide Sperrelemente (20) mit jeweiligen gegenüberliegenden Flächen (22) versehen sind, die durch Reibschluss ineinander eingreifen, um die gegenseitige Drehung der beiden Arme (12) zu sperren, wobei beide gegenüberliegende Flächen (22) mit miteinander kämmenden Zähnen versehen sind, um die Reibkraft zwischen den beiden Sperrelementen (20) zu erhöhen, wobei der Sicherheitsmechanismus (16) wenigstens eine elastische Komponente (24) umfasst, die zwischen den beiden Sperrelementen (20) angeordnet und ausgebildet ist, um die Sperrelemente (20) außer Eingriff zu halten, wenn der Sicherheitsmechanismus (16) nicht betätigt ist, wobei der Sicherheitsmechanismus (16) einen Griff (26) umfasst, der mit den beiden Sperrelementen (20) wirkverbunden und ausgebildet ist, um die beiden Sperrelemente (20) selektiv einander anzunähern und der elastischen Kraft der wenigstens einen elastischen Komponente (24) entgegenzuwirken, um den Sicherheitsmechanismus (16) zur gesperrten Position zu bewegen sowie die beiden Sperrelemente (20) voneinander zu beabstanden und die wenigstens eine elastische Komponente (24) freizugeben, um den Sicherheitsmechanismus (16) in die entsperrte Position zu bewegen,
wobei ein Anschlagmittel (28) an einem der Arme (12) befestigt und ausgebildet ist, um den Griff (26) in der gesperrten Position zu halten, bis eine vorgegebene Entsperrkraft auf den Griff (26) aufgebracht wird, um ein unerwünschtes Entsperren des Griffes (26) zu verhindern, welcher ein unbeabsichtigtes Entsperren des Sicherheitsmechanismus (16) bewirken könnte.

2. Bügelbrett (10) nach Anspruch 1, **dadurch gekennzeichnet, dass** wenigstens eine elastische Komponente (24) aus einer durch Druck wirkenden Spiralfeder besteht.

3. Bügelbrett (10) nach Anspruch 1 oder 2, **dadurch gekennzeichnet, dass** der Griff (26) drehbar mit einem ersten Ende des Stifts (18) verbunden ist und dadurch zum Annähern oder Beabstanden der beiden Sperrelemente (20) entlang der axialen Richtung des Stifts (18) dient.

4. Bügelbrett (10) nach einem der Ansprüche 1-3, **dadurch gekennzeichnet, dass** es einen Hebel (30) zur Höhenverstellung der Arbeitsfläche (14) umfasst, wobei die Betätigung des Hebels (30) in der Betriebskonfiguration verhindert wird, in der der Sicherheitsmechanismus (16) sich in der gesperrten Position befindet.

## Revendications

1. Planche à repasser (10) constituée d'une structure pliable qui comprend au moins un pied de support (12), configuré pour maintenir ladite structure fixe et stable sur le sol dans une configuration ouverte ou de fonctionnement de la planche à repasser (10), et au moins une surface de travail (14) qui, dans la configuration ouverte ou de fonctionnement de la planche à repasser (10), est agencée dans une position sensiblement horizontale, à une hauteur prédéterminée par rapport au sol, afin de former une surface de support sur laquelle les vêtements à repasser sont placés, la surface de travail (14) étant contrainte de manière coulissante et/ou pivotante sur ledit au moins un pied de support (12) pour permettre la rotation ou la translation en rotation mutuelle de ladite surface de travail (14) par rapport audit au moins un pied de support (12) de sorte que la planche à repasser (10) peut passer de la configuration ouverte ou de fonctionnement à une configuration pliée et vice-versa, la planche à repasser (10) comprenant un mécanisme de sécurité (16) relié de manière fonctionnelle audit au moins un pied de support (12) et configuré pour verrouiller sélectivement le mouvement de rotation ou de translation en rotation mutuelle de la surface de travail (14) par rapport audit au moins un pied de support (12), dans laquelle ledit au moins un pied de support (12) est constitué d'une paire de bras mutuellement articulés (12) dans une configuration sensiblement en forme de X, dans laquelle un premier bras (12) est contraint de manière pivotante, à une extrémité supérieure de celui-ci, sur la surface inférieure de la surface de travail (14) tandis que le second bras (12) est contraint de manière coulissante, à une extrémité supérieure de celui-ci, sur la surface inférieure de la surface de travail (14), et **caractérisée en ce que**
les deux bras (12) sont également mutuellement articulés autour d'une tige (18) sur laquelle le mécanisme de sécurité (16) est installé, de sorte que ledit mécanisme de sécurité (16) est apte à verrouiller sélectivement le mouvement de rotation mutuelle des deux bras (12) et par conséquent, le mouvement de translation en rotation correspondant desdits deux bras (12) par rapport à la surface de travail (14), dans laquelle le mécanisme de sécurité (16) comprenant une paire d'éléments de verrouillage (20), chacun desquels étant contraint de manière inamovible sur un bras respectif (12), les deux éléments de verrouillage (20) étant munis de surfaces opposées respectives (22) qui viennent mutuellement en prise par friction pour verrouiller la rotation mutuelle des deux bras (12), dans laquelle les deux surfaces opposées (22) sont munies de dents qui s'engrènent mutuellement pour augmenter la force de friction entre les deux éléments de verrouillage (20), dans laquelle le mécanisme de sécurité (16) comprenant au moins un composant élastique (24) interposé entre les deux éléments de verrouillage (20) et configuré pour maintenir lesdits éléments de verrouillage (20) non mis en prise lorsque le mécanisme de sécurité (16) n'est pas actionné,
dans laquelle le mécanisme de sécurité (16) comprend une poignée (26), reliée de manière fonctionnelle aux deux éléments de verrouillage (20) et configurée pour rapprocher sélectivement lesdits deux éléments de verrouillage (20), en agissant contre la force élastique dudit au moins un composant élastique (24), pour déplacer le mécanisme de sécurité (16) vers la position verrouillée, ainsi que pour écarter lesdits deux éléments de verrouillage (20), en libérant ledit au moins un composant élastique (24) pour déplacer le mécanisme de sécurité (16) vers la position déverrouillée,
dans laquelle un moyen d'arrêt (28) est fixé sur l'un des bras (12), configuré pour maintenir la poignée (26) dans la position verrouillée à moins qu'une force de déverrouillage prédéterminée soit appliquée sur ladite poignée (26), afin d'éviter la libération non désirée de ladite poignée (26), ce qui peut provoquer le déverrouillage accidentel du mécanisme de sécurité (16).

2. Planche à repasser (10) selon la revendication 1, **caractérisée en ce que** ledit au moins un composant élastique (24) est constitué d'un ressort hélicoïdal agissant par compression.

3. Planche à repasser (10) selon la revendication 1 ou 2, **caractérisée en ce que** la poignée (26) est contrainte en rotation sur une première extrémité de la tige (18) et par conséquent agit pour rapprocher ou écarter les deux éléments de verrouillage (20) le long de la direction axiale de ladite tige (18).

4. Planche à repasser (10) selon l'une quelconque des revendications 1 à 3, **caractérisée en ce qu'**elle comprend un levier (30) pour le réglage en hauteur de la surface de travail (14), l'actionnement dudit levier (30) étant empêché dans la configuration de fonctionnement dans laquelle le mécanisme de sécurité (16) est en position verrouillée.
